# EUROPEAN PATENT APPLICATION

(11) **EP 3 943 567 A1**
(43) Date of publication of application: **26.01.2022**
(21) Application number: 20777440.7
(22) Date of filing: 12.03.2020
(51) Int. Cl.: C09J 199/00, C09J 7/25, C09J 7/38

(54) **PRESSURE-SENSITIVE ADHESIVE SHEET**

(30) Priority: 22.03.2019 JP 2019054306
(71) Applicant: Nitto Denko Corporation, Ibaraki-shi, Osaka 567-8680 (JP)
(72) Inventor: WATANABE, Shigeki, Ibaraki-shi, Osaka 567-8680 (JP); NIWA, Masahito, Ibaraki-shi, Osaka 567-8680 (JP)
(74) Representative: Müller-Boré & Partner Patentanwälte PartG mbB
(86) International application number: PCT/JP2020/010689
(87) International publication number: WO 2020/195864

(57) **Abstract**

Provided is a PSA sheet that allows reduction of the dependence on fossil-resource-based materials as the PSA sheet at large while having good processability. Provided is a PSA sheet having a substrate layer comprising a polyester resin, and a PSA layer placed on at least one face of the substrate layer. At least 50 % of all carbons in the PSA layer are biomass-derived carbons. The polyester resin comprises biomass-derived carbons.

## Description

### [Technical Field]

The present invention relates to a pressure-sensitive adhesive sheet.

The present application claims priority to Japanese Patent Application No. 2019-054306 filed on March 22, 2019, whose entire content is incorporated herein by reference.

### [Background Art]

In general, pressure-sensitive adhesive (PSA) exists as a soft solid (a viscoelastic material) in a room temperature range and has a property to adhere easily to an adherend with some pressure applied. With such properties, PSA is widely used as a joining means having high operability and high reliability of adhesion, for instance, in a form of supported PSA sheet having a PSA layer on a support, in various industrial fields such as home appliances, automobiles, various types of machinery, electrical equipment, and electronic equipment. A PSA sheet is also preferably used, for example, for fixing components of electronic devices such as mobile phones, smartphones, and tablet-type personal computers. Documents disclosing this type of conventional art include Patent Documents 1 and 2.

### [Citation list]

### [Patent Literature]

[Patent Document 1] Japanese Patent No. 6104500
[Patent Document 2] Japanese Patent Application Publication No. 2015-221847
[Patent Document 3] Japanese Patent No. 5316725
[Patent Document 4] International Patent Application Publication No. WO 2016/186122

### [Summary of Invention]

### [Technical Problem]

In late years, much attention has been placed on environmental problems such as global warming with expectations for reducing the usage of materials based on fossil resources such as petroleum. PSA sheets are no exception, either. With focus on the PSA, natural rubber and rosin are known as highly biobased materials. By sort of modifying or altering these natural-resource-based materials, while maintaining the biobased content at or above a certain level, it is possible to obtain adhesive properties (adhesion holding power, heat resistance, etc.) suitable for use in specific applications, for instance, electronic devices. Substrate-supported PSA sheets are widely used, having advantages to substrate-free kinds in view of processability (ease of processing) in complex shapes and higher process yields. As for the substrate materials, biomass-derived polyolefins and polylactic acid are known; however, because polyolefins have low rigidity, there are limitations to developing their use in applications where slimming is required, such as electronic device applications. Polylactic acid has lower rigidity than plastics for general purposes and also tends to show poorer moldability; and thus, there are limitations to where it can be applied.

With respect to polyester resins such as polyethylene terephthalate (PET), some are reported to use biomass-derived diols in synthesis (e.g. Patent Documents 3 and 4). However, as described in Patent Documents 3 and 4, innovation is required to obtain comparable properties to fossil-resource-based materials. As their contribution to the biobased content is small for the cost increase, the study of practical applications has made little progress. There have been no reports of PSA sheets using biomass-derived polyester resin. Accordingly, the present inventors have conducted earnest studies and created a novel PSA sheet with practical value, using biomass-derived polyester resin. In particular, an objective of this invention is to provide a highly processable PSA sheet that uses a biomass-derived polyester resin and allows reduction of dependence on fossil-resource-based materials as the PSA sheet at large.

### [Solution to Problem]

The present Description provides a PSA sheet comprising a substrate layer and a PSA layer. The substrate layer comprises a polyester resin, and the PSA layer is placed on at least one face of the substrate layer. At least 50 % of all carbons in the PSA layer are biomass-derived carbons. The polyester resin includes biomass-derived carbons. The PSA sheet uses biomass materials in both the PSA layer and the substrate layer; and therefore, the PSA sheet at large can be less dependent on fossil-resource-based materials. Having the polyester resin-containing substrate layer, the PSA sheet also has good processability. In particular, according to an embodiment including the polyester resin-containing substrate layer, it is easily punched into complex shapes and the process yield can be increased. Such an embodiment tends to show excellent reworkability (removability) in case of a failed application. The excellent removability is also advantageous in view of recyclability. In addition, as the polyester resin-containing substrate layer tends to be highly rigid, the PSA sheet can be easily slimmed.

In some preferable embodiments, the ratio of the thickness of the substrate layer to the total thickness of the PSA sheet is 10 % or higher. The processability can be improved by forming the substrate layer with relatively high rigidity to have at least the prescribed thickness ratio, and also as a result of lowering the thickness ratio of the PSA layer to help prevent the PSA from blocking.

In some preferable embodiments, the substrate layer has a breaking strength of 200 MPa or greater. By using the substrate layer having at least the prescribed breaking strength, excellent processability is readily obtained and the PSA sheet is easily slimmed.

In some preferable embodiments, at least 50 % of all carbons in the PSA sheet are biomass-derived carbons. According to the art disclosed herein, using biomass materials in both the PSA layer and the substrate layer forming the PSA sheet, the ratio of biomass carbons to all carbons in the entire PSA sheet can be 50 % or higher. In an embodiment comprising the PSA layer and the substrate layer, the usage of fossil-resource-based materials can be effectively reduced.

In some preferable embodiments, the ratio of the thickness of the substrate layer to the total thickness of the PSA sheet is 50 % or lower. Incorporation of biomass carbons is more difficult in the polyester resin-containing substrate layer than in the PSA layer in view of the sorts of technical, economical and quality aspects. Thus, to make the PSA sheet at large less dependent on fossil-resource-based materials while maintaining prescribed adhesive properties, a realistic and favorable choice can be to reduce the ratio of the polyester resin-containing substrate layer in the entire PSA sheet.

In some preferable embodiments, at least 5 % of all carbons in the substrate layer are biomass-derived carbons. The use of the substrate layer having at least the prescribed biomass-derived carbon content can preferably reduce the dependence on fossil-resource-based materials as the PSA sheet at large.

The PSA sheet according to some preferable embodiments shows a shear bonding strength of 1.8 MPa or greater. The PSA sheet capable of exhibiting a high shear bonding strength while using at least the prescribed amount of biomass materials can reduce environmental stress in various applications requiring properties such as adhesion holding properties.

The PSA sheet disclosed herein is preferably an adhesively double-faced PSA sheet provided with the PSA layer on each face of the substrate layer. For instance, the double-faced PSA sheet is suitable for fixing parts.

The PSA sheet disclosed herein can exhibit adhesive properties suited for various applications and also has good processability while allowing slimming of the substrate. Thus, it is particularly favorable for fixing parts of electronic devices, which tend to require space savings and adhesive properties such as adhesion holding properties. In electronic device applications which are produced and consumed in mass quantities and suffer obsolescence, reduction of environmental stress by reducing the dependence on fossil-resource-based materials has a major impact.

### [Brief Description of Drawings]

Fig. 1 shows a cross-sectional diagram schematically illustrating the constitution of the PSA sheet according to an embodiment.
Fig. 2 shows a cross-sectional diagram schematically illustrating the constitution of the PSA sheet according to another embodiment.
Fig. 3 shows a cross-sectional diagram schematically illustrating the constitution of the PSA sheet according to another embodiment.
Fig. 4 shows a cross-sectional diagram schematically illustrating the constitution of the PSA sheet according to another embodiment.
Fig. 5 shows a diagram schematically illustrating the method for determining shear bonding strength.

### [Description of Embodiments]

Preferred embodiments of the present invention are described below. Matters necessary to practice this invention other than those specifically referred to in this description may be comprehended by a person of ordinary skill in the art based on the instruction regarding implementations of the invention according to this description and the common technical knowledge in the pertinent field. The present invention can be practiced based on the contents disclosed in this description and common technical knowledge in the subject field.

In the drawings referenced below, a common reference numeral may be assigned to members or sites producing the same effects, and duplicated descriptions are sometimes omitted or simplified. The embodiments described in the drawings are schematized for clear illustration of the present invention, and do not necessarily represent the accurate sizes or reduction scales of the PSA sheet to be provided as an actual product by the present invention.

The concept of PSA sheet here encompasses so-called PSA tapes, PSA labels, PSA films and the like. The PSA layer disclosed herein is typically formed in a continuous manner, but is not limited to such an embodiment. The PSA layer may be formed in a regular or random pattern of dots, stripes, etc. The PSA sheet disclosed herein may be in a rolled form or in a flat sheet form. Alternatively, the PSA sheet may be further processed into various forms.

As used herein, the term "PSA" refers to, as described earlier, a material that exists as a soft solid (a viscoelastic material) in a room temperature range and has a property to adhere easily to an adherend with some pressure applied. As defined in *"*Adhesion:Fundamentals and Practice" by C. A. Dahlquist (McLaren & Sons (1966), P. 143), PSA referred to herein may generally be a material that has a property satisfying complex tensile modulus E* (1Hz) < 10⁷ dyne/cm² (typically, a material that exhibits the described characteristics at 25 °C).

### <Structure of PSA sheet>

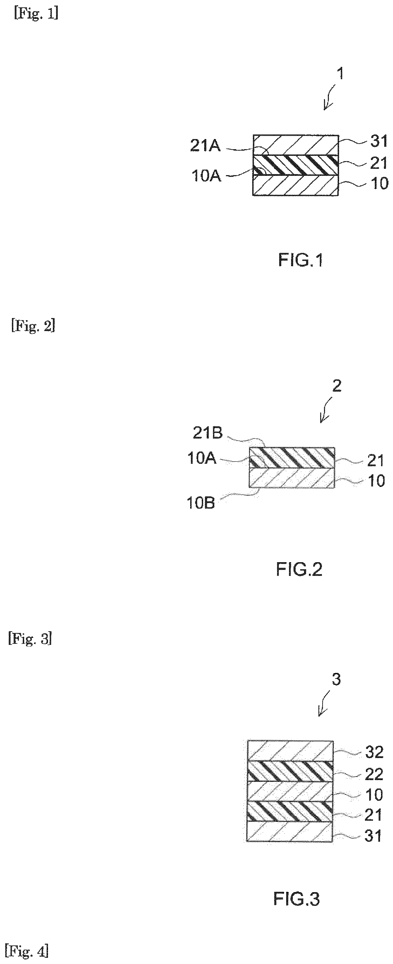

The PSA sheet disclosed herein comprises a substrate layer and a PSA layer. The substrate layer comprises a polyester resin, and the PSA layer is placed on at least one face of the substrate layer. The PSA sheet can be in an embodiment having the PSA layer on one or each face of a non-releasable substrate (support substrate). The PSA sheet disclosed herein can have cross-sectional structures schematically illustrated in Fig. 1 to Fig. 4. Fig. 1 schematically illustrates the structure of the PSA sheet according to an embodiment. PSA sheet 1 according to this embodiment is formed as an adhesively single-faced, substrate-supported PSA sheet. PSA sheet 1 before used (i.e. before applied to an adherend) has a structure where PSA layer 21 is provided to the first face 10A (non-releasable) of substrate layer 10 and a surface (contact face) 21A of PSA layer 21 is protected with a release liner 31 of which at least the PSA layer side is a release face.

Fig. 2 schematically illustrates the structure of the PSA sheet according to another embodiment. Similar to PSA sheet 1 in Fig. 1, PSA sheet 2 according to this embodiment is also formed as an adhesively single-faced substrate-supported PSA sheet and has a structure where PSA layer 21 is provided to the first face 10A (non-releasable) of substrate layer 10. In PSA sheet 2, the other (second) face 10B of substrate layer 10 is a release face; and before used, when PSA sheet 2 is wound, PSA layer 21 is brought in contact with the second face 10B and the surface (contact face) 21B of the PSA layer is protected with the second face 10B of substrate layer 10.

Fig. 3 schematically illustrates the structure of the PSA sheet according to yet another embodiment. PSA sheet 3 according to this embodiment is formed as an adhesively double-faced substrate-supported PSA sheet. PSA sheet 3 has PSA layers 21 and 22 provided to the respective faces (both non-releasable) of substrate layer 10. PSA sheet 3 before used has a structure where PSA layers 21 and 22 are protected, respectively, with release liners 31 and 32 each having a release face at least on the PSA layer side.

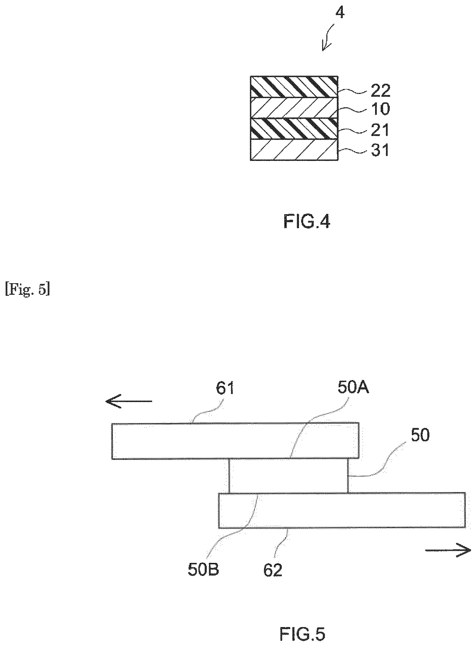

Fig. 4 shows the constitution of the PSA sheet according to yet another embodiment. Similar to the PSA sheet in Fig. 3, PSA sheet 4 according to this embodiment is also formed as an adhesively double-faced substrate-supported PSA sheet. PSA sheet 4 has PSA layers 21 and 22 on the respective faces (both non-releasable) of substrate layer 10; and before used, it has a constitution where between the two, PSA layer 21 is protected with release liner 31 of which both faces are release faces. By winding PSA sheet 4 to bring the other PSA layer 22 in contact with the backside of release liner 31, PSA sheet 4 can be made in an embodiment where PSA layer 22 is also protected with release liner 31.

### <PSA layer>

### (Biomass carbon ratio)

In the PSA sheet disclosed herein, the PSA layer has a biomass carbon ratio (or biobased content) of 50 % or higher. A high biomass carbon ratio of the PSA layer means low usage of fossil-resource-based materials typified by petroleum and the like. From such a standpoint, it can be said that the higher the biomass carbon ratio of the PSA layer is, the more preferable it is. For instance, the biomass carbon ratio of the PSA layer can be 60 % or higher, 70 % or higher, 75 % or higher, or even 80 % or higher. The maximum biomass carbon ratio is 100 % by definition. The biomass carbon ratio is typically below 100 %. From the standpoint of readily obtaining shear bonding strength, in some embodiments, the biomass carbon ratio of the PSA layer can be, for instance, 95 % or lower. When adhesive properties are of greater importance, it can be 90 % or lower, or even 85 % or lower.

As used herein, the biomass-derived carbon (or possibly abbreviated to the "biomass carbon") refers to carbon (renewable carbon) found in a material derived from a renewable organic resource. The biomass material refers to a material derived from a bioresource (typically a photosynthetic plant) that is continuously renewable typically in the sole presence of sun light, water and carbon dioxide. Accordingly, the concept of biomass material excludes materials based on fossil resources (fossil-resource-based materials) that are exhausted by using after mining.

The "biomass carbon ratio" (or the "biobased content") here refers to the ratio of biomass carbons to all carbons in a measurement sample (specimen) and is determined based on ASTM D6866. Among the methods described in ASTM D6866, Method B with high precision is preferable. The same applies to the biobased contents of the PSA layer, substrate layer and PSA sheet described later. The biomass carbon ratio here is determined from the percent ¹⁴C (unit: pMC (percent modern carbon)) relative to the standard value (modern reference standard) defined by a standard substance.

In the art disclosed herein, the type of PSA forming the PSA layer is not particularly limited while satisfying the 50 % or higher biobased content. The PSA (possibly a PSA composition) may comprise one, two or more species among various rubber-like polymers such as acrylic polymers, synthetic rubber-based polymers, polyester-based polymers, urethane-based polymers, polyether-based polymers, silicone-based polymers, polyamide-based polymers and fluoropolymers known in the field of PSA. From the standpoint of the adhesive properties, cost, etc., a PSA (rubber-based PSA) comprising a rubber-based polymer as the primary component is preferable. Examples of the rubber-based PSA include a natural rubber-based PSA and a synthetic rubber-based PSA. A modified rubber-based PSA such as acrylated natural rubber can be preferably used as well. The biobased content of the PSA layer can be adjusted by a species of polymer forming the PSA and its content percentage.

In some embodiments, the PSA sheet has a PSA layer formed from a natural rubber-based PSA. The natural rubber-based PSA refers to a PSA whose base polymer includes more than 50 % natural-rubber-based polymer(s) which can be one, two or more species of polymers selected among natural rubbers and modified natural rubbers. Herein, the concept of natural-rubber-based polymer encompasses both natural rubbers and modified natural rubbers. The base polymer of the PSA refers to a rubbery polymer in the PSA; other than this, it is not limited to any particular interpretation in relation to, for instance, its amount contained, other components, etc. The rubbery polymer refers to a polymer that shows rubber elasticity in a temperature range around room temperature. In addition to the natural-rubber-based polymer(s), the base polymer of the PSA may include a non-natural-rubber-based polymer as a secondary component. Examples of the non-natural-rubber-based polymer include acrylic polymers, synthetic rubber-based polymers, polyester-based polymers, urethane-based polymers, polyether-based polymers, silicone-based polymers, polyamide-based polymers and fluoropolymers known in the field of PSA.

In some preferable embodiments, at least 20 % (by weight) of all the repeat units forming the base polymer of PSA is attributed to an acrylic monomer-derived repeat unit. In other words, at least 20 % of the total weight of the base polymer comes from the acrylic monomer. Hereinafter, the ratio of the weight coming from the acrylic monomer to the total weight of the base polymer may be referred to as the "acrylate ratio." When the base polymer comprises at least the certain percentage of the acrylic monomer-derived repeat unit, the cohesive strength of the natural rubber-based PSA can be increased. This can increase the shear bonding strength, without requiring the use of, for instance, a vulcanizer or sulfur-containing vulcanization accelerator.

From the standpoint of increasing the cohesive strength of the PSA, the acrylate ratio of the base polymer can be, for instance, higher than 20 % by weight, preferably 24 % by weight or higher, 28 % by weight or higher, or even 33 % by weight or higher. From the standpoint of placing more emphasis on the cohesive strength, in some embodiments, the acrylate ratio of the base polymer can be 35 % by weight or higher, 38 % by weight or higher, or even 40 % by weight or higher. The maximum acrylate ratio of the base polymer is selected so that the PSA layer has a biomass carbon ratio of 50 % by weight or higher. From the standpoint of increasing the biomass carbon ratio of the PSA layer, the lower the acrylate ratio of the base polymer is, the more advantageous it is. From such a standpoint, the acrylate ratio of the base polymer is suitably below 70 % by weight, preferably below 60 % by weight, possibly below 55 % by weight, or even below 50 % by weight. From the standpoint of further increasing the biomass carbon ratio, in some embodiments, the acrylate ratio of the base polymer can be below 45 % by weight, below 42 % by weight, or even below 39 % by weight.

The acrylic monomer-derived repeat unit in the base polymer may be a repeat unit forming an acrylate-modified natural rubber. The PSA sheet disclosed herein can be preferably made in an embodiment where the base polymer of the PSA comprises an acrylate-modified natural rubber. Here, the acrylate-modified natural rubber refers to a natural rubber grafted with an acrylic monomer. The PSA in such an embodiment may further comprise a base polymer (e.g. natural rubber) that is free of an acrylic monomer-derived repeat unit. The base polymer of the PSA may further include an acrylic monomer-derived repeat unit as a repeat unit forming a polymer which is not an acrylate-modified natural rubber.

As used herein, the acrylic monomer refers to a monomer having at least one (meth)acryloyl group per molecule. The "(meth)acryloyl" here comprehensively refers to acryloyl and methacryloyl. Thus, the concept of acrylic monomer here encompasses both a monomer having an acryloyl group (acrylic monomer) and a monomer having a methacryloyl group (methacrylic monomer).

In the acrylate-modified natural rubber, the acrylic monomer grafted on the natural rubber is not particularly limited. Examples include: an alkyl (meth)acrylate having an alkyl group with 1 to 8 carbons at the ester terminus, such as methyl (meth)acrylate, ethyl (meth)acrylate and butyl (meth)acrylate; and (meth)acrylic acid. These can be used singly as one species or in a combination of two or more species. Acrylic monomers preferred from the standpoint of increasing the cohesive strength include (meth)acrylic acid and an alkyl (meth)acrylate having an alkyl group with 1 to 2 carbons at the ester terminus. From the standpoint of reducing the corrosiveness, a carboxy group-free acrylic monomer is advantageous. From such a standpoint, an alkyl (meth)acrylate is preferable. In particular, methyl methacrylate (MMA) and ethyl methacrylate are preferable; and MMA is especially preferable.

Of the total weight of the acrylate-modified natural rubber, the percentage of the weight of the acrylic monomer-derived repeat unit (or the acrylate modification rate) should be in the range above 0 % by weight and below 100 % by weight; and it is not particularly limited. From the standpoint of enhancing the effect to increase the cohesive strength, the acrylate modification rate of the acrylate-modified natural rubber is suitably 1 % by weight or higher, possibly 5 % by weight or higher, 10 % by weight or higher, or even 15 % by weight or higher. From the standpoint of obtaining greater cohesive strength, in some embodiments, the acrylate modification rate can be, for instance, above 20 % by weight, 24 % by weight or higher, 28 % by weight or higher, 33 % by weight or higher, 35 % by weight or higher, 38 % by weight or higher, or even 40 % by weight or higher. From the standpoint of increasing the biomass carbon ratio, the acrylate modification rate of the acrylate-modified natural rubber is suitably below 80 % by weight, preferably below 70 % by weight, possibly below 60 % by weight, below 55 % by weight, below 50 % by weight, or even below 45 % by weight.

The acrylate-modified natural rubber can be produced by a known method or a commercially-available product can be used. Examples of the production method of acrylate-modified natural rubber include a method where addition polymerization is carried out upon addition of the acrylic monomer to the natural rubber, a method where a pre-formed oligomer of the acrylic monomer is mixed with and added onto the natural rubber, and an intermediate method between these. The ratio between the natural rubber and the acrylic monomer as well as other production conditions can be suitably selected so as to obtain an acrylate-modified natural rubber having a desired acrylate modification rate. The natural rubber used in production of the acrylate-modified natural rubber is not particularly limited. For instance, a suitable species can be selected among various natural rubbers that are generally available, such as a ribbed smoked sheet (RSS), pale crepe, standard Malaysian rubber (SMR) and standard Vietnamese rubber (SVR). When a natural rubber is used in combination with the acrylate-modified natural rubber, the natural rubber can also be selected among the same various natural rubbers. The natural rubber is typically used upon mastication by a usual method.

The Mooney viscosity of the natural rubber used in producing the acrylate-modified natural rubber is not particularly limited. For instance, it is possible to use a natural rubber having a Mooney viscosity MS₁₊₄(100 °C) (i.e. a Mooney viscosity determined at MS (1+4) 100 °C) in a range of about 10 or greater and 120 or less. The natural rubber's Mooney viscosity MS₁₊₄(100 °C) can be, for instance, 100 or less, 80 or less, 70 or less, or even 60 or less. With decreasing Mooney viscosity MS₁₊₄(100 °C), it tends to readily show initial tack. This is advantageous in increasing the efficiency of application to adherend. From such a standpoint, in some embodiments, the Mooney viscosity MS₁₊₄(100 °C) of the natural rubber can be 50 or less, 40 or less, or even 30 or less. The Mooney viscosity MS₁₊₄(100 °C) can be adjusted by a general method such as mastication.

The acrylic monomer can be added onto the natural rubber in the presence of a radical polymerization initiator. Examples of the radical polymerization initiator include general peroxide-based initiators, azo-based initiators, and a redox-based initiator by combination of a peroxide and a reducing agent. These can be used singly as one species or in a combination of two or more species. Among them, a peroxide-based initiator is preferable. Examples of the peroxide-based initiator include diacyl peroxides such as aromatic diacyl peroxides typified by benzoyl peroxide (BPO) and aliphatic diacyl peroxides such as dialkyloyl peroxides (e.g. dilauroyl peroxide). Other examples of the peroxide-based initiator include t-butyl hydroperoxide, di-t-butyl peroxide, t-butyl peroxybenzoate, dicumyl peroxide, 1,1-bis(t-butylperoxy)-3,3,5-trimethylcyclohexane, and 1,1-bis(t-butylperoxy)cyclododecane. For the peroxide-based initiator, solely one species or a combination of two or more species can be used.

The base polymer of the PSA may consist of one, two or more species of acrylate-modified natural rubbers, or it may comprise an acrylate-modified natural rubber and other polymer(s) together. The ratio of the acrylate-modified natural rubber to the entire base polymer is not particularly limited. It can be suitably selected in the range above 0 % by weight and below 100 % by weight. In some embodiments, the acrylate-modified natural rubber content can be, for instance, 10 % by weight or higher. From the standpoint of obtaining good holding properties (e.g. high shear bonding strength), it is advantageously 25 % by weight or higher, or preferably 40 % by weight or higher. In some embodiments, the acrylate-modified natural rubber content can be above 50 % by weight, 65 % by weight or higher, 80 % by weight or higher, or even 90 % by weight or higher. It is noted that when an acrylate-modified natural rubber is used solely as the base polymer, the acrylate-modified natural rubber accounts for 100 % by weight of the entire base polymer.

From the standpoint of the miscibility, as the polymer used together with the acrylate-modified natural rubber, for instance, a rubber-based polymer can be preferably used. As the rubber-based polymer, either a natural rubber or a synthetic rubber (e.g. styrene-butadiene rubber, styrene-butadiene block copolymer, styrene-isobutylene block copolymer, etc.) can be used. From the standpoint of increasing the biomass carbon ratio, it is particularly preferable to use a natural rubber which is a biomass material. The base polymer may consist of an acrylate-modified natural rubber and a natural rubber, or it may include an acrylate-modified natural rubber, a natural rubber and other polymer(s) altogether. In some embodiments, the polymer other than the acrylate-modified natural rubber and the natural rubber has the content suitably below 30 % by weight of the entire base polymer, preferably below 20 % by weight, or possibly below 10 % by weight.

When using a natural rubber, the ratio of the natural rubber to the total amount of the acrylate-modified natural rubber and natural rubber can be above 0 % by weight. For instance, it can be 5 % by weight or higher, 10 % by weight or higher, 25 % by weight or higher, or even 40 % by weight or higher. With increasing ratio of natural rubber, the biomass carbon ratio of the PSA tends to increase. The ratio of the natural rubber to the total amount of the acrylate-modified natural rubber and natural rubber can be below 100 % by weight; it can also be 95 % by weight or lower, 75 % by weight or lower, or even 60 % by weight or lower. From the standpoint of obtaining a higher shear bonding strength, in some embodiments, the natural rubber content can be 50 % by weight or less, 45 % by weight or less, 35 % by weight or less, or even 25 % by weight or less.

Other polymers that can be used in combination with the acrylate-modified natural rubber include an acrylic polymer and a polyester-based polymer. The acrylic polymer may be formed from a monomer mixture comprising a monomer having biomass-derived carbons. A preferable polyester-based polymer is formed from a polycarboxylic acid (typically a dicarboxylic acid) and a polyol (typically a diol) of which at least one is a compound comprising partially or entirely biomass-derived carbons, for instance, a plant-derived compound. As the biomass-derived dicarboxylic acid, for instance, a dimeric acid derived from a plant-derived unsaturated fatty acid (sebacic acid, oleic acid, erucic acid, etc.) can be used. As the biomass-derived diol, for instance, a dimeric diol obtainable by reduction of the dimeric acid, biomass ethylene glycol obtainable from biomass ethanol as the starting material, or the like can be used. Such a polyester-based polymer may have a biomass carbon ratio of, for instance, above 40 %, preferably above 50 %, 70 % or higher, 85 % or higher, 90 % or higher, or even 100 %. From the standpoint of the miscibility, etc., the polyester-based polymer content is suitably less than 20 % by weight of the entire base polymer, preferably less than 10 % by weight, or possibly even less than 5 % by weight.

### (Crosslinking agent)

In the PSA layer of the PSA sheet disclosed herein, a crosslinking agent is preferably used. The crosslinking agent may contribute to an increase in cohesive strength of the PSA. This can effectively increase the shear bonding strength. The crosslinking agent can be selected among various crosslinking agents known in the field of PSA. Examples of the crosslinking agent include isocyanate-based crosslinking agent, epoxy-based crosslinking agent, oxazoline-based crosslinking agent, aziridine-based crosslinking agent, melamine-based crosslinking agent, peroxide-based crosslinking agent, urea-based crosslinking agent, metal alkoxide-based crosslinking agent, metal chelate-based crosslinking agent, metal salt-based crosslinking agent, carbodiimide-based crosslinking agent, and amine-based crosslinking agent. As the crosslinking agent, solely one species or a combination of two or more species can be used.

When using a crosslinking agent, the amount used is not particularly limited. The amount of crosslinking agent used to 100 parts by weight of base polymer can be selected from a range of, for instance, 0.001 part to 15 parts by weight. From the standpoint of obtaining an increase in cohesive strength and tight adhesion to adherend in a well-balanced manner, the amount of crosslinking agent used to 100 parts by weight of base polymer is preferably 12 parts by weight or less, possibly 8 parts by weight or less, or 6 parts by weight or less; it is suitably 0.005 part by weight or greater, or possibly 0.01 part by weight or greater.

The crosslinking agent is preferably selected among sulfur-free crosslinking agents. Here, the sulfur-free crosslinking agent means a crosslinking agent that is at least free of intentionally-added sulfur (S) and the concept of this material is clearly distinct from a vulcanizer which is generally used as a crosslinking agent for natural rubber. A crosslinking agent whose active ingredient is a compound free of sulfur as a constituent is a typical example of the sulfur-free crosslinking agent referred to here. The sulfur-free crosslinking agent is used as the crosslinking agent to avoid incorporation of sulfur from the crosslinking agent into the PSA layer. This can be an advantageous feature in a PSA sheet used in the field of electronic devices for which the presence of sulfur is undesirable. In the PSA sheet disclosed herein, it is preferable that no vulcanizer is used in the PSA layer.

In some embodiments, the crosslinking agent preferably comprises at least an isocyanate-based crosslinking agent. As the isocyanate-based crosslinking agent, solely one species or a combination of two or more species can be used. The isocyanate-based crosslinking agent can also be used in combination with other crosslinking agent(s), for instance, an epoxy-based crosslinking agent.

As the isocyanate-based crosslinking agent, a polyisocyanate-based crosslinking agent having at least two isocyanate groups per molecule is preferably used. The number of isocyanate groups per molecule of polyisocyanate-based crosslinking agent is preferably 2 to 10, for instance, 2 to 4, or typically 2 or 3. Examples of the polyisocyanate-based crosslinking agent include aromatic polyisocyanates such as tolylene diisocyanate and xylene diisocyanate; alicyclic isocyanates such as isophorone diisocyanate; and aliphatic polyisocyanates such as hexamethylene diisocyanate. More specific examples include lower aliphatic polyisocyanates such as butylene diisocyanate and hexamethylene diisocyanate; alicyclic polyisocyanates such as cyclopentylene diisocyanate, cyclohexylene diisocyanate and isophorone diisocyanate; aromatic diisocyanates such as 2,4-tolylene diisocyanate, 4,4' -diphenylmethane diisocyanate, xylylene diisocyanate and polymethylene polyphenyl isocyanate; isocyanate adducts such as trimethylolpropane-tolylene diisocyanate trimer adduct (product name CORONATE L available from Tosoh Corporation), a trimethylolpropane-hexamethylene diisocyanate trimer adduct (product name CORONATE HL available from Tosoh Corporation), and isocyanurate of hexamethylene diisocyanate (product name CORONATE HX available from Tosoh Corporation); polyisocyanates such as polyether polyisocyanate and polyester polyisocyanate; adducts of these polyisocyanates and various polyols; and polyisocyanates polyfunctionalized with isocyanurate bonds, biuret bonds, allophanate bonds, etc.

When using an isocyanate-based crosslinking agent, relative to 100 parts by weight of base polymer, it can be used in an amount of, for instance, about 0.1 part by weight or greater, 0.5 part by weight or greater, 1.0 part by weight or greater, or even greater than 1.5 parts by weight. From the standpoint of obtaining greater effects of its use, the amount of isocyanate-based crosslinking agent used to 100 parts by weight of base polymer can be, for instance, greater than 2.0 parts by weight, 2.5 parts by weight or greater, or even 2.7 parts by weight or greater. The amount of isocyanate-based crosslinking agent used to 100 parts by weight of base polymer is suitably 10 parts by weight or less, possibly 7 parts by weight or less, or even 5 parts by weight or less. From the standpoint of avoiding a decrease in tightness of adhesion to adherend caused by excessive crosslinking, it may be advantageous to not use an excessive amount of isocyanate-based crosslinking agent.

As the epoxy-based crosslinking agent, a polyfunctional epoxy compound having at least two epoxy groups per molecule can be used. Examples include N,N,N',N'-tetraglycidyl-m-xylenediamine, diglycidylaniline, 1,3-bis(N,N-diglycidylaminomethyDcyclohexane, 1,6-hexanediol diglycidyl ether, neopentyl glycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylolpropane polyglycidyl ether, adipic acid diglycidyl ester, o-phthalic acid diglycidyl ester, triglycidyl-tris(2-hydroxyethyl) isocyanurate, resorcine diglycidyl ether, bisphenol-S-diglycidyl ether and an epoxy-based resin having at least two epoxy groups per molecule. Examples of commercial epoxy-based crosslinking agents include TETRAD C and TETRAD X available from Mitsubishi Gas Chemical, Inc.

When using an epoxy-based crosslinking agent, relative to 100 parts by weight of base polymer, it can be used in an amount of, for instance, about 0.005 part by weight or greater; or from the standpoint of obtaining greater effects of its use, 0.01 part by weight or greater, or even 0.02 part by weight or greater. The amount of epoxy-based crosslinking agent used to 100 parts by weight of base polymer is suitably 2 parts by weight or less, possibly 1 part by weight or less, 0.5 part by weight or less, or even 0.1 part by weight or less. From the standpoint of avoiding a decrease in tightness of adhesion to adherend caused by excessive crosslinking, it may be advantageous to not use an excessive amount of epoxy-based crosslinking agent.

When using an isocyanate-based crosslinking agent and a different crosslinking agent (i.e. non-isocyanate-based crosslinking agent) together, the relative amounts of the isocyanate-based crosslinking agent and non-isocyanate-based crosslinking agent (e.g. an epoxy-based crosslinking agent) are not particularly limited. From the standpoint of favorably combining tight adhesion to adherend and cohesive strength, in some embodiments, the non-isocyanate-based crosslinking agent content can be, by weight, about 1/2 of the isocyanate-based crosslinking agent content or less, about 1/5 or less, about 1/10 or less, about 1/20 or less, or even about 1/30 or less. From the standpoint of favorably obtaining the effects of the combined use of isocyanate-based crosslinking agent and non-isocyanate-based crosslinking agent (e.g. an epoxy-based crosslinking agent), the non-isocyanate-based crosslinking agent content is suitably about 1/1000 of the isocyanate-based crosslinking agent content or greater, for instance, about 1/500 or greater.

To efficiently carry out the crosslinking reaction by an aforementioned crosslinking agent, a crosslinking catalyst can also be used. As the crosslinking catalyst, for instance, a tin-based catalyst can be preferably used such as dioctyltin dilaurate. The amount of crosslinking catalyst used is not particularly limited. For instance, to 100 parts by weight of base polymer, it can be about 0.0001 part to 1 part by weight.

Another example of the crosslinking agent that can be used in the PSA layer of the PSA sheet disclosed herein is a monomer having two or more polymerizable functional groups per molecule, that is, a polyfunctional monomer. Examples of the polyfunctional monomer include ethylene glycol di(meth)acrylate, propylene glycol di(meth)acrylate, polyethylene glycol di(meth)acrylate, polypropylene glycol di(meth)acrylate, neopentyl glycol di(meth)acrylate, pentaerythritol di(meth)acrylate, pentaerythritol tri(meth)acrylate, dipentaerythritol hexa(meth)acrylate, ethyleneglycol di(meth)acrylate, 1,6-hexanediol di(meth)acrylate, 1,12-dodecanediol di(meth)acrylate, trimethylolpropane tri(meth)acrylate, tetramethylolmethane tri(meth)acrylate, allyl (meth)acrylate, vinyl (meth)acrylate, divinylbenzene, epoxy acrylate, polyester acrylate, urethane acrylate, butanediol (meth)acrylate and hexanediol (meth)acrylate.

When using a polyfunctional monomer as the crosslinking agent, its amount used will depend on its molecular weight, the number of functional groups therein, etc. It is suitably in a range of about 0.01 part to 3.0 parts by weight to 100 parts by weight of base polymer. In some embodiments, from the standpoint of obtaining greater effects, the amount of polyfunctional monomer used to 100 parts by weight of base polymer can be, for instance, 0.02 part by weight or greater, or even 0.03 part by weight or greater. On the other hand, from the standpoint of avoiding a decrease in tack caused by an excessive increase in cohesive strength, the amount of polyfunctional monomer used to 100 parts by weight of base polymer can be 2.0 parts by weight or less, 1.0 part by weight or less, or even 0.5 part by weight or less.

The PSA layer in the PSA sheet disclosed herein may be subjected to electron beam crosslinking (a crosslinking treatment by electron beam irradiation) for the purpose of increasing the cohesive strength, etc. The electron beam-induced crosslinking can be carried out in place of or in combination with the use of an aforementioned crosslinking agent.

### (Tackifier)

The PSA in the art disclosed herein may have a composition that includes a tackifier (typically a tackifier resin). The use of tackifier may improve the properties (e.g. shear bonding strength and/or peel strength) of the PSA sheet. The tackifier is not particularly limited. For instance, various tackifier resins can be used, such as rosin-based tackifier resins, terpene-based tackifier resins, hydrocarbon-based tackifier resins and phenolic tackifier resins. These tackifiers can be used singly as one species or in a combination of two or more species.

Specific examples of the rosin-based tackifier resin include unmodified rosins (raw rosins) such as gum rosin, wood rosin and tall-oil rosin; modified rosins (hydrogenated rosins, disproportionated rosins, polymerized rosins, other chemically-modified rosins, etc.) obtainable by subjecting these unmodified rosins to modifications such as hydrogenation, disproportionation and polymerization; and various other rosin derivatives. Examples of the rosin derivatives include rosin esters such as rosin esters obtainable by esterifying unmodified rosins with alcohols (i.e. esterified rosins) and modified rosin esters obtainable by esterifying modified rosins (hydrogenated rosins, disproportionated rosins, polymerized rosins, etc.) with alcohols (i.e. esterified modified rosins); unsaturated fatty acid-modified rosins obtainable by modifying unmodified rosins or modified rosins (hydrogenated rosins, disproportionated rosins, polymerized rosins, etc.) with unsaturated fatty acids; unsaturated fatty acid-modified rosin esters obtainable by modifying rosin esters with unsaturated fatty acids; rosin alcohols obtainable by reduction of carboxy groups in unmodified rosins, modified rosins (hydrogenated rosins, disproportionated rosins, polymerized rosins, etc.), unsaturated fatty acid-modified rosins, or unsaturated fatty acid-modified rosin esters; metal salts of rosins such as unmodified rosins, modified rosins and various rosin derivatives (especially rosin esters); and rosin phenol resins obtainable by subjecting rosins (hydrogenated rosins, disproportionated rosins, polymerized rosins, etc.) to acid-catalyzed phenol addition followed by thermal polymerization.

Examples of the terpene-based tackifier resin include terpene-based resins such as α-pinene polymers, β-pinene polymers and dipentene polymers; and modified terpene-based resins obtainable by subjecting these terpene-based resins to modifications (phenol modification, aromatic modification, hydrogenation, hydrocarbon modification, etc.). Examples of the modified terpene resin include terpene phenol-based resins, styrene modified terpene-based resins, aromatic modified terpene-based resins and hydrogenated terpene-based resins.

Examples of the hydrocarbon-based tackifier resin include various hydrocarbon resins such as aliphatic hydrocarbon resins, aromatic hydrocarbon resins, aliphatic cyclic hydrocarbon resins, aliphatic/aromatic petroleum resins (styrene-olefin copolymers and the like), aliphatic/alicyclic petroleum resins, hydrogenated hydrocarbon resin, coumarone resins, and coumarone indene resins.

Examples of the aliphatic hydrocarbon resins include polymers of one, two or more species of aliphatic hydrocarbons selected among olefins and dienes having about 4 to 5 carbon atoms. Examples of the olefin include 1-butene, isobutylene and 1-pentene. Examples of the diene include butadiene, 1,3-pentadiene and isoprene.

Examples of the aromatic hydrocarbon resins include polymers of vinyl-group-containing aromatic hydrocarbons (styrene, vinyl toluene, α-methyl styrene, indene, methyl indene, etc.) having 8 to 10 carbon atoms. Examples of the alicyclic hydrocarbon resins include alicyclic hydrocarbon-based resins obtainable by polymerization of cyclic dimers of so-called "C4 petroleum fractions" and "C5 petroleum fractions"; polymers of cyclic diene compounds (cyclopentadiene, dicyclopentadiene, ethylidene norbornene, dipentene, etc.) or hydrogenation products of these polymers; and alicyclic hydrocarbon-based resins obtainable by hydrogenation of aromatic rings in aromatic hydrocarbon resins or aliphatic-aromatic petroleum resins.

When the PSA layer disclosed herein includes a tackifier, from the standpoint of increasing the biomass carbon ratio of the PSA layer, it is preferable to use a tackifier derived from a plant (i.e. a plant-based tackifier) as the tackifier. Examples of the plant-based tackifier may include the aforementioned rosin-based tackifier resins and terpene-based tackifier resins. The plant-based tackifiers can be used singly as one species or in a combination of two or more species. When the PSA layer disclosed herein includes a tackifier, the ratio of plant-based tackifier to the total amount of tackifier is preferably 30 % by weight or higher (e.g. 50 % by weight or higher, typically 80 % by weight or higher). In a particularly preferable embodiment, the ratio of plant-based tackifier to the total amount of tackifier is 90 % by weight or higher (e.g. 95 % by weight or higher, typically 99 % to 100 % by weight). The art disclosed herein can be preferably implemented in an embodiment essentially free of a non-plant-based tackifier.

In the art disclosed herein, it is preferable to use a tackifier resin having a softening point (softening temperature) of about 60 °C or higher (preferably about 80 °C or higher, more preferably about 95 °C or higher, e.g. about 105 °C or higher). Such a tackifier resin can bring about a PSA sheet having superior properties (e.g. higher shear bonding strength). The maximum softening point of the tackifier resin is not particularly limited. In some embodiments, from the standpoint of the miscibility, etc., the tackifier resin can have a softening point of about 200 °C or lower, about 180 °C or lower, about 140 °C or lower, or even about 120 °C or lower. The softening point of tackifier resin referred to herein is defined as the value measured by the softening point test method (ring and ball method) specified either in JIS K5902:2006 or in JIS K2207:2006.

The tackifier resin content is not particularly limited. It can be suitably selected in accordance with desired adhesive properties (shear bonding strength, peel strength, etc.). In some embodiments, the tackifier resin content to 100 parts by weight of base polymer can be, for instance, 5 parts by weight or greater, suitably 15 parts by weight or greater, 30 parts by weight or greater, 40 parts by weight or greater, 50 parts by weight or greater, or even 65 parts by weight or greater. In view of the balance among adhesive properties, in some embodiments, the tackifier resin content to 100 parts by weight of base polymer can be, for instance, 200 parts by weight or less, suitably 150 parts by weight or less, possibly 120 parts by weight or less, 100 parts by weight or less, or even 85 parts by weight or less.

### (Other components)

Th PSA layer may include various additives generally known in the field of PSA compositions as necessary, such as a leveling agent, plasticizer, filler, colorant (pigment, dye, etc.), antistatic agent, anti-aging agent, UV absorber, antioxidant and photo-stabilizer. As for these various additives, heretofore known species can be used by typical methods.

The filler content in the PSA layer can be, for instance, 0 part by weight or greater and 200 parts by weight or less (preferably 100 parts by weight or less, e.g. 50 parts by weight or less) relative to 100 parts by weight of base polymer. From the standpoint of preventing the filler from falling out of the PSA layer, in some embodiment, the filler content relative to 100 parts by weight of base polymer is suitably less than 30 parts by weight, preferably less than 20 parts by weight, more preferably less than 10 parts by weight, possibly less than 5 parts by weight, or even less than 1 part by weight. The PSA layer may be free of any filler.

The plasticizer content in the PSA layer can be, for instance, 0 part by weight or greater and 35 parts by weight or less relative to 100 parts by weight of base polymer. From the standpoint of obtaining a good shear bonding strength suited for fixing parts, the plasticizer content is preferably 25 parts by weight or less, or more preferably 15 parts by weight or less. From the standpoint of reducing the amount of possible volatile(s) arising from the plasticizer, in some embodiments, the plasticizer content relative to 100 parts by weight of base polymer is suitably less than 10 parts by weight, possibly less than 5 parts by weight, less than 3 parts by weight, or even less than 1 part by weight. Especially, when the PSA sheet is for internal use in an electronic device or for use in a precision electronic instrument, it is advantageous to reduce the plasticizer content or to not use any plasticizer.

In the PSA layer, it is preferable that neither vulcanizer nor sulfur-containing vulcanization accelerator (thiuram-based vulcanization accelerator, dithiocarbamate-based vulcanization accelerator, thiazole-based vulcanization accelerator, etc.) is used. This can be an advantageous feature as a PSA sheet used in the field of electronic devices for which the presence of sulfur is undesirable. In the PSA layer of the PSA sheet disclosed herein, it is preferable to avoid the use of any sulfur-containing material, not just vulcanizers and vulcanization accelerators.

The PSA layer (layer formed of PSA) in the PSA sheet disclosed herein can be formed from a PSA composition having such a composition. The form of PSA composition is not particularly limited. For instance, it can be an aqueous PSA composition, solvent-based PSA composition, hot-melt PSA composition, or active energy ray-curable PSA composition. Here, the aqueous PSA composition refers to a PSA composition comprising a PSA (PSA layer-forming components) in a solvent (an aqueous solvent) primarily comprising water and the concept encompasses a water-dispersed PSA composition in which the PSA is dispersed in water and a water-soluble PSA composition in which the PSA is dissolved in water. The solvent-based PSA composition refers to a PSA composition comprising a PSA in an organic solvent. The PSA sheet disclosed herein can be preferably made in an embodiment having a PSA layer formed from a solvent-based PSA composition.

The PSA layer disclosed herein can be formed from a PSA composition by a heretofore known method. For instance, it is preferable to employ a method (direct method) for forming a PSA layer where a PSA composition is directly provided (typically applied) to the substrate and allowed to cure. Alternatively, it is also possible to employ a method (transfer method) where a PSA composition is provided to a releasable surface (release face) and allowed to cure to form a PSA layer on the surface and the resulting PSA layer is transferred to a substrate. As the release face, the surface of a release liner, the substrate's backside that has been treated with release agent, or the like can be used. The PSA composition can be cured by subjecting the PSA composition to a curing process such as drying, crosslinking, polymerization, cooling, etc. Two or more different curing processes can be carried out at the same time or stepwise.

The PSA composition can be applied, using a heretofore known coater, for instance, a gravure roll coater, reverse roll coater, kiss roll coater, dip roll coater, die coater, bar coater, knife coater and spray coater. Alternatively, the PSA composition can be applied by immersion, curtain coating, etc.

From the standpoints of accelerating the crosslinking reaction, improving production efficiency, and the like, it is preferable to dry the PSA composition under heating. The drying temperature can be, for example, about 40 °C to 150 °C, and temperature of about 60 °C to 130 °C is preferable. After drying the PSA composition, aging may be implemented for purposes such as adjusting the distribution or migration of components in the PSA layer, advancing the crosslinking reaction, and lessening possible strain in the substrate and the PSA layer.

In the PSA sheet disclosed herein, the thickness of the PSA layer is not particularly limited and can be suitably selected in accordance with the purpose. In view of the balance between adhesion to adherend and cohesion, the thickness of the PSA layer can be, for instance, about 2 µm to 500 µm. From the standpoint of the adhesion to adherend, the thickness of the PSA layer is usually suitably 3 µm or greater, or preferably 5 µm or greater. From the standpoint of readily obtaining a PSA sheet that shows a greater shear bonding strength, in some embodiments, the thickness of the PSA layer can be, for instance, 8 µm or greater, preferably 12 µm or greater, 15 µm or greater, 20 µm or greater, or even 25 µm or greater. From the standpoint of making the PSA sheet thinner, the thickness of the PSA layer can be, for instance, 200 µm or less, 150 µm or less, 100 µm or less, 70 µm or less, 50 µm or less, or even 30 µm or less. In an embodiment where thinning is of greater importance, the thickness of the PSA layer can be, for instance, 20 µm or less, 15 µm or less, or even 12 µm or less. When the PSA sheet disclosed herein is a double-faced PSA sheet having a PSA layer on each face of a substrate, the respective PSA layers may have the same thickness or different thicknesses.

### <Substrate Layer>

The PSA sheet disclosed herein includes a substrate layer comprising a polyester resin. By this, the PSA sheet can provide good processability. The polyester resin used in the substrate layer is a biomass polyester resin comprising biomass-derived carbons. The use of biomass polyester resin as the substrate layer material allows it to provide good processability while reducing the dependence on fossil-based materials as the PSA sheet at large. Examples of the biomass polyester resin include biomass polyethylene terephthalate (PET) resin, biomass polyethylene naphthalate (PEN) resin, biomass polybutylene terephthalate (PBT) resin, biomass polybutylene naphthalate (PBN) resin, biomass polyethylene furanoate (PEF) resin, and biomass polytrimethylene terephthalate resin. Among them, biomass PET resin, biomass PEN resin, biomass PBT resin and biomass PBN resin are preferable, with the biomass PET resin being more preferable. As the biomass polyester resin, it is typical to use a polyester resin comprising, as the primary component, a polyester obtained by polycondensation of a dicarboxylic acid and a diol. A biomass-derived compound can be used in at least one (e.g. in each) between the dicarboxylic acid and the diol used for the synthesis to obtain a biomass polyester resin.

The form of biomass polyester resin-containing substrate layer is not particularly limited. In some preferable embodiments, from the standpoint of the size stability, thickness precision, cost, ease of processing, tensile strength, etc., the substrate layer of the PSA sheet comprises polyester resin film. An embodiment including a polyester resin film layer facilitates punching into complex shapes and also tends to provide excellent reworkability (removability) in case of a failed application. The excellent removability is also advantageous in view of recyclability. In addition, because it is highly rigid, the substrate layer can be made thin while maintaining aimed mechanical properties. For instance, in the field for use in electronic devices, the resin film is less likely to form dust (e.g. fine fibers or particles such as paper dust). As used herein, the "resin film" typically refers to a non-porous film and is conceptually distinct from so-called non-woven and woven fabrics.

Examples of the dicarboxylic acid forming the polyester (or the "dicarboxylic acid unit (residue)" in the synthesized polyester) include aromatic dicarboxylic acids such as phthalic acid, isophthalic acid, terephthalic acid, 2-methylterephthalic acid, 5-sulfoisophthalic acid, 4,4'-diphenyldicarboxylic acid, 4,4'-diphenyl ether dicarboxylic acid, 4,4'-diphenyl ketone dicarboxylic acid, 4,4'-diphenoxyethane dicarboxylic acid, 4,4'-diphenylsulfone dicarboxylic acid, 1,4-naphthalene dicarboxylic acid, 1,5-naphthalene dicarboxylic acid, 2,6-naphthalene dicarboxylic acid and 2,7-naphthalene dicarboxylic acid; alicyclic dicarboxylic acids such as 1,2-cyclohexane dicarboxylic acid, 1,3-cyclohexane dicarboxylic acid, and 1,4-cyclohexane dicarboxylic acid; aliphatic dicarboxylic acids such as malonic acid, succinic acid, glutaric acid, adipic acid, pimelic acid, suberic acid, azelaic acid, sebacic acid, 1,9-nonane dicarboxylic acid, and 1,12-dodecane dicarboxylic acid; unsaturated dicarboxylic acids such as maleic acid, anhydrous maleic acid, and fumaric acid; and derivatives of these (e.g. lower alkyl esters of the dicarboxylic acids such as terephthalic acid, etc.). These can be used singly as one species or in a combination of two or more species.

The dicarboxylic acid forming the polyester may comprise terephthalic acid as the primary component. Specific examples of the polyester resin in this embodiment include PET resin and PBT resin. In such an embodiment, the ratio of terephthalic acid in the entire dicarboxylic acid forming the polyester is suitably about 50 % by weight or higher. From the standpoint of sufficiently obtaining the effect of the use of terephthalic acid, it is preferably about 90 % by weight or higher (typically 95 % by weight or higher, e.g. 99 % to 100 % by weight). In synthesizing polyester, terephthalic acid can be used as, for instance, a derivative such as a terephthalic acid lower alkyl ester.

As the dicarboxylic acid, a biomass-derived dicarboxylic acid can be preferably used. By this, the polyester resin can include a prescribed amount of biomass carbon. In some embodiments, as the dicarboxylic acid, biomass-derived terephthalic acid and a derivative thereof can be used. The method for obtaining the biomass-derived dicarboxylic acid is not particularly limited. Examples include a method (WO 2009/079213) where isobutanol is obtained from corn, saccharides or wood and then converted to isobutylene; this is dimerized to obtain isooctene from which p-xylene is synthesized by the method according to Chemische Technik, vol.38, No.3, p116-119; 1986, that is, via radical cleavage, recombination and cyclization; and p-xylene is oxidized to obtain biomass-derived terephthalic acid.

No particular limitations are imposed on the ratio of biomass-derived dicarboxylic acid (e.g. terephthalic acid) in the dicarboxylic acid (e.g. terephthalic acid) forming the polyester. From the standpoint of increasing the biobased content, of the entire dicarboxylic acid forming the polyester, the biomass-derived dicarboxylic acid accounts for about 1 % by weight or more (e.g. 1 % to 100 % by weight), suitably about 10 % by weight or more, for instance, possibly about 50 % by weight or more, about 80 % by weight or more, about 90 % by weight or more, or even about 99 % by weight or more. Essentially all of the dicarboxylic acid can be a biomass-derived dicarboxylic acid. In other embodiments (e.g. an embodiment where the polyester-forming diol comprises a biomass-derived diol), of the entire dicarboxylic acid, the biomass-derived dicarboxylic acid may account for less than 1 % by weight. The polyester may be essentially free of a biomass-derived dicarboxylic acid.

Examples of the diol forming the polyester include aliphatic diols such as ethylene glycol, diethylene glycol, polyethylene glycol, propylene glycol, polypropylene glycol, 1,2-propanediol, 1,3-propanediol, 1,5-pentanediol, neopentyl glycol, 1,2-butanediaol, 2,3-butanediol, 1,4-butanediol, 1,6-hexanediol, 1,8-octanediol, and polyoxytetramethylene glycol; alicyclic diols such as 1,2-cyclohexanediol, 1,4-cyclohexanediol, 1,1-cyclohexanedimethylol, and 1,4-cyclohexanedimethylol; and aromatic diols such as xylylene glycol, 4,4'-dihydroxybiphenyl, 2,2-bis(4'-hydroxyphenyl)propane, and bis(4-hydroxyphenyl)sulfone. These can be used singly as one species or in a combination of two or more species. From the standpoint of the transparency, etc., aliphatic diols are preferable and ethylene glycol is particularly preferable. The ratio of the aliphatic diol (preferably ethylene glycol) in the diol forming the polyester is preferably 50 % by weight or higher (e.g. 80 % by weight or higher, typically 95 % by weight or higher). The diol may essentially consist of ethylene glycol.

The diol forming the polyester (or the "diol unit (residue)" in the synthesized polyester) may comprise ethylene glycol as the primary component. Specific examples of the polyester resin in this embodiment include biomass PET resin and biomass PEN resin. In such an embodiment, the ratio of ethylene glycol in the entire diol forming the polyester is suitably about 50 % by weight or higher. From the standpoint of sufficiently obtaining the effect of the use of ethylene glycol, it is preferably about 90 % by weight or higher (typically 95 % by weight or higher, e.g. 99 % to 100 % by weight).

As the diol, biomass-derived diol (typically biomass diol obtained from biomass ethanol as the starting material) can be preferably used. By this, the polyester resin film can include a prescribed amount of biomass carbon. In some preferable embodiments, as the diol, biomass-derived ethylene glycol (typically biomass ethylene glycol obtained from biomass ethanol as the starting material) can be used.

Of the diol (favorably ethylene glycol) forming the polyester, the ratio of biomass-derived diol (favorably ethylene glycol) is not particularly limited. From the standpoint of increasing the biobased content, of the entire diol forming the polyester, the biomass-derived diol accounts for about 1 % by weight or higher (e.g. 1 % to 100 % by weight), suitably about 10 % by weight or higher, for instance, possibly 50 % by weight or higher, about 80 % by weight or higher, about 90 % by weight or higher, or even about 99 % by weight or higher. Essentially all of the diol can be biomass-derived diol. In other embodiments (e.g. an embodiment where the dicarboxylic acid forming the polyester includes a biomass-derived dicarboxylic acid), of the entire diol, the biomass-derived diol may account for less than 1 % by weight or the polyester may be essentially free of a biomass-derived diol.

The polyester can be essentially formed from a dicarboxylic acid and a diol; however, for purposes such as introducing a desirable functional group, adjusting the molecular weight and so on, it may be possible to copolymerize a tri- or higher polycarboxylic acid, tri- or higher polyol, monocarboxylic acid, monohydric alcohol, hydroxycarboxylic acid, lactone or the like while the effect of the art disclosed is not impaired. These other comonomers can be biomass-derived or non-biomass-derived. Suitably, the other comonomers account for, for instance, less than 30 % by mole, or typically less than about 10 % by mole (or even less than 1 % by mole). The art disclosed herein can also be preferably implemented in an embodiment where the monomers of the polyester are essentially free of the other comonomers.

The method for obtaining the polyester disclosed herein is not particularly limited. A polymerization method known as a synthetic method for polyester can be suitably employed. From the standpoint of the polymerization efficiency and molecular weight adjustment, etc., a starting monomer used for the polyester synthesis can be obtained by polycondensation of a dicarboxylic acid and a diol at a suitable molar ratio. More specifically, the polyester can be synthesized by allowing the carboxylic acid's carboxy group and the diol's hydroxy group to undergo reaction while typically eliminating the water formed by the reaction (i.e. by-product water) out of the reaction system. As the method for eliminating the by-product water out of the reaction system, it is possible to use a method where inert gas is allowed to flow into the reaction system to eliminate by-product water along itself out of the reaction system, a method (depressurization method) where the by-product water is eliminated out of the reaction system under reduced pressure, and like method. As it is likely to shorten the time for synthesis and is suited for improving the productivity, the depressurization method can be preferably used. The reaction can be batch polymerization, semi-continuous polymerization, or continuous polymerization.

The reaction temperature when carrying out the reaction (including esterification and polycondensation) and the depressurization level (the pressure inside the reaction system) in case of employing the depressurization method can be suitably set so as to efficiently obtain a polymer having the aimed properties (e.g. molecular weight). While no particular limitations are imposed, in view of the reaction rate, preventing degradation, etc., the reaction temperature is suitably 180 °C to 290 °C (e.g. 250 °C to 290 °C). While no particular limitations are imposed, in view of the sort of reaction efficiency, the depressurized level is suitably at or below 10 kPa (typically at 10 kPa to 0.1 kPa), for instance, possibly at 4 kPa to 0.1 kPa. From the standpoint of stably maintaining the pressure inside the reaction system, it is suitable that the reaction system has an internal pressure of 0.1 kPa or higher.

In the reaction, similar to general polyester synthesis, a known or commonly used catalyst can be used in a suitable amount for esterification or condensation. Examples of ester exchange catalysts include magnesium-based, manganese-based, calcium-based, cobalt-based, lithium-based, titanium-based, zinc-based and barium-based compounds. Examples of polymerization catalysts include various metal compounds such as titanium-based, aluminum-based, germanium-based, antimony-based, tin-based, and zinc-based compounds; and strong acids such as p-toluenesulfonic acid and sulfuring acid. In the synthesis, a solvent may be used or may not be used. The synthesis can be carried out essentially without using an organic solvent (e.g. meaning to exclude an embodiment involving intentional use of an organic solvent as the reaction solvent for the reaction). In the reaction, additives such as stabilizer (a phosphorous compound, etc.) can be optionally added.

The polyester resin-containing layer used in the art disclosed herein may comprise a non-polyester polymer in addition to the polyester. Examples of the non-polyester polymer include polyolefin resins such as polyethylene (PE), polypropylene (PP), ethylene-propylene copolymer, and ethylene-butene copolymer; urethane resin; polyether; acrylic resin; rubbers such as natural rubber, modified natural rubber, and synthetic rubber (chloroprene rubber, styrene-butadiene rubber, nitrile rubber, etc.); vinyl chloride resin; vinylidene chloride resin; vinyl acetate resin; polystyrene; polyacetal; polyimide; polyamide; fluororesin; and cellophane. These can be used solely as one species or in a combination of two or more species. The non-polyester polymer can be a biomass-derived polymer or fossil-resource-based polymer. Examples of non-polyester biomass resin include biomass polyolefin resins such as biomass polyethylene resins including biomass high density polyethylene (biomass HDPE) resin, biomass low density polyethylene (biomass LDPE) resin and biomass linear low density polyethylene (biomass LLDPE) resin as well as biomass polypropylene (biomass PP) resin; polylactic acid; biomass poly(3-hydroxybutyrate-co-3-hydroxyhexanoate); biomass polyamide resins such as polyhexamethylene sebacamide and poly(xylene sebacamide); biomass polyurethane resins such as biomass polyester ether urethane resin and biomass polyether urethane resin; and cellulose-based resins. Among these, solely one species or a combination of two or more species can be used.

When the polyester resin-containing layer includes a non-polyester polymer in addition to the polyester, the non-polyester polymer content is suitably less than 100 parts by weight to 100 parts by weight of polyester, preferably about 50 parts by weight or less, more preferably about 30 parts by weight or less, or yet more preferably about 10 parts by weight or less. The non-polyester polymer content relative to 100 parts by weight of polyester can be about 5 parts by weight or less, or even about 1 part by weight or less. The art disclosed herein can be preferably implemented in an embodiment where, for instance, the polymer in the polyester resin-containing layer is 99.5 % to 100 % polyester by weight.

For the method for producing the biomass polyester resin film-containing layer (favorably, biomass polyester resin film) disclosed herein, except for using a biomass polyester resin, a heretofore known method can be suitably employed without particular limitations. For instance, the biomass polyester resin film-containing layer (favorably, biomass polyester resin film) can be fabricated, using a biomass polyester resin prepared by a known polyester synthesis method while using the aforementioned materials, or a commercial biomass-derived polyester (e.g. product name PLANTPET available from Teijin, Ltd.); and adding suitable amounts of various additives if necessary and suitably employing a film-molding method such as extrusion, inflation molding, T-die casting, and calendar rolling.

The biobased content of the biomass polyester resin film-containing layer (favorably, biomass polyester resin film) disclosed herein is not particularly limited. It is about 1 % or higher, or suitably about 5 % or higher. From the standpoint of reducing the dependence on fossil-resource-based materials, the biobased content of the biomass polyester resin film-containing layer is preferably about 8 % or higher, more preferably about 12 % or higher (e.g. about 15 % or higher), possibly about 30 % or higher, or even about 60 % or higher; or it can be at a specific percentage selected from the range at or above about 90 % or higher. The maximum biobased content of the biomass polyester resin film-containing layer is 100 %. From the standpoint of the cost-effectiveness, etc., it can be below 50 %, or even below 40 %; or it can be at a specific percentage selected from the range below 30 % (e.g. below 20 %).

The thickness of the biomass polyester resin-containing layer (favorably a biomass polyester resin film layer) is not particularly limited and can be suitably selected in accordance with the purpose. The biomass polyester resin-containing layer suitably has a thickness of about 1 µm or greater. From the standpoint of the handling properties and ease of processing, it can be, for instance, 1.5 µm or greater, 2 µm or greater, 3 µm or greater, 4 µm or greater, or even 6 µm or greater. When the biomass polyester resin-containing layer has at least a prescribed thickness, there is a tendency towards improving the ease of processing into complex shapes and the ease of reworking (ease of removal) in case of a failed application. From the standpoint of making the PSA sheet thinner, in some embodiments, the biomass polyester resin-containing layer has a thickness of, for instance, 150 µm or less, 100 µm or less, 50 µm or less, 25 µm or less, 20 µm or less, 10 µm or less, 7 µm or less, less than 5 µm, or even less than 4 µm. The art disclosed herein can bring about good properties for processing in an embodiment using a thin biomass polyester resin-containing layer as described above.

The substrate layer disclosed herein may have a monolayer structure or a multilayer structure with two, three or more layers. From the standpoint of the shape stability, the resin film preferably has a monolayer structure. In other words, the substrate layer may be formed of a biomass polyester resin-containing layer. When the substrate layer has a multilayer structure, at least one layer among them is a biomass polyester resin-containing layer (typically a biomass polyester resin film layer). In the multilayer substrate layer, the other layers are not particularly limited. Various substrates in sheet forms can be used. For instance, non-biomass polyester resin film, paper, fabrics, rubber sheets, foam sheets, metal foil, a composite of these and the like can be used. Examples of the non-biomass polyester resin film include polyolefin resin films formed from the sorts of PE, PP, ethylene-propylene copolymer, and ethylene-butene copolymer; biomass polyolefin resin film; urethane resin film; biomass urethane resin film; vinyl chloride resin film; vinylidene chloride resin film; vinyl acetate resin film; polystyrene film; polyacetal film; polyimide film; polyamide film; fluororesin film; and cellophane. Examples of the rubber sheet include a natural rubber sheet and a butyl rubber sheet. Examples of the foam sheet include a polyurethane foam sheet and a polyolefin foam sheet. Examples of the metal foil include aluminum foil and copper foil.

To the substrate layer (e.g. a biomass polyester resin film layer), various additives can be added as necessary, such as a filler (inorganic filler, organic filler, etc.), anti-aging agent, antioxidant, UV absorber, antistatic agent, slip agent, plasticizer and colorant (pigment, dye, etc.). The amount of the various additives is usually about 30 % by weight or less (e.g. 20 % by weight or less, typically 10 % by weight or less) in the substrate. For instance, when a pigment (e.g. white pigment) is included in the substrate, the pigment content is suitably about 0.1 % to 10 % by weight (e.g. 1 % to 8 % by weight, typically 1 % to 5 % by weight).

The face of the substrate layer on which the PSA layer is placed (i.e. the PSA layer-side surface) may be subjected to a known or common surface treatment such as corona discharge treatment, plasma treatment, UV irradiation, acid treatment, base treatment and formation of a primer layer. Such surface treatment may be carried out to increase the tightness of adhesion between the substrate layer and the PSA layer, that is, the anchoring of the PSA layer to the substrate layer. Alternatively, the substrate layer may be free of any surface treatment to enhance the anchoring of the PSA layer-side surface. When forming a primer layer, the primer used for the formation is not particularly limited and a suitable species can be selected among known primers. The thickness of the primer layer is not particularly limited. For instance, it can be above 0.01 µm; and it is usually suitably 0.1 µm or greater. From the standpoint of obtaining greater effects, it can also be 0.2 µm or greater. The thickness of the primer layer is preferably less than 1.0 µm, or possibly 0.7 µm or less, or even 0.5 µm or less.

In a single-faced PSA sheet having a PSA layer on one face of the substrate layer, the PSA layer-free face (backside) of the substrate layer may be subjected to release treatment with a release agent (backside treatment agent). The backside treatment agent possibly used for formation of the backside treatment layer is not particularly limited. It is possible to use silicone-based backside treatment agents, fluorine-based backside treatment agents, long-chain alkyl-based backside treatment agents and other known or common agents in accordance with the purpose and application. For the backside treatment agent, solely one species or a combination of two or more species can be used.

The biobased content of the substrate layer is above 0 %, for instance, about 1 % or higher, or suitably about 5 % or higher. From the standpoint of reducing the dependence on fossil-resource-based materials, the biobased content of the substrate layer is preferably about 8 % or higher, more preferably about 12 % or higher (e.g. about 15 % or higher), possibly about 30 % or higher, or even about 60 % or higher; or it can be selected from the range at or above about 90 %. The maximum biobased content of the substrate layer is 100 %. From the standpoint of the cost-effectiveness, etc., it can be below 50 %, or even below 40 %; or it can be selected from the range below 30 % (e.g. below 20 %).

The breaking strength of the substrate layer disclosed herein is not particularly limited. For instance, it is suitably about 100 MPa or greater (e.g. about 150 MPa or greater). From the standpoint of the ease of processing and handling, it is preferably about 200 MPa or greater (e.g. about 220 MPa or greater), about 250 MPa or greater, or even about 300 MPa or greater (e.g. about 340 MPa or greater). The maximum breaking strength of the substrate layer is suitably, for instance, about 800 MPa or less. From the standpoint of the conformability to the adherend surface, etc., it is preferably about 500 MPa or less, more preferably about 460 MPa or less, about 400 MPa or less, about 350 MPa or less, or even about 300 MPa or less. The breaking strength of the substrate layer can be determined based on JIS C 2318.

The thickness of the substrate layer is not particularly limited and can be suitably selected in accordance with the purpose. For instance, it is within the range of about 1 µm to 500 µm. From the standpoint of the substrate layer's handling properties and ease of processing, the thickness of the substrate layer can be, for instance, 1.5 µm or greater, 2 µm or greater, 3 µm or greater, 4 µm or greater, or even 6 µm or greater. The substrate layer having a thickness of at least a prescribed value tends to improve the processability into complex shapes and the reworkability (removability) in case of a failed application. From the standpoint of making the PSA sheet thinner, in some embodiment, the thickness of the substrate layer can be, for instance, 150 µm or less, 100 µm or less, 50 µm or less, 25 µm or less, 20 µm or less, 10 µm or less, 7 µm or less, less than 5 µm, or even less than 4 µm. The art disclosed herein can bring about good properties for processing in an embodiment using a thin substrate layer as described above.

The total thickness (including the thickness of the PSA layer and substrate layer, but excluding the thickness of any release liner) of the PSA sheet can be suitably selected in accordance with the purpose and is not limited to a specific range. For instance, the ratio of the thickness of the substrate layer to the total thickness of the PSA sheet is suitably about 1 % or higher (e.g. about 5 % or higher). From the standpoint of the ease of punching into complex shapes, increased process yields and the reworkability (removability) in case of a failed application, it is preferably about 10 % or higher, about 15 % or higher, about 20 % or higher, about 25 % or higher, or even about 30 % or higher (e.g. about 40 % or higher). The ratio of the thickness of the substrate layer to the total thickness of the PSA sheet is suitably about 90 % or lower (e.g. about 70 % or lower), preferably about 50 % or lower, about 30 % or lower, about 20 % or lower, or even about 15 % or lower. The substrate layer having a limited thickness ratio helps bring out the PSA's properties. In an embodiment using a PSA with a high biobased content, the PSA sheet at large can also be less dependent on fossil-resource-based materials.

### <Release liner>

The PSA sheet disclosed herein may be provided, as necessary, as a release-lined PSA sheet in which a release liner is adhered to an adhesive face (of a PSA layer, the face on the side applied to an adherend) to protect the adhesive face. The release liner is not particularly limited. It is possible to use, for instance, a release liner in which a surface of a liner substrate (resin film, paper, etc.) has been subjected to release treatment, or a release liner formed from a low-adhesive material such as a fluoropolymer (polytetrafluoroethylene, etc.) or a polyolefinic resin (PE, PP, etc.). As the resin film (layer) of the release liner, it is preferable to use a polyester resin film such as PET resin film; a polyolefin resin film such as PP and ethylene-propylene copolymer, a thermoplastic resin film such as polyvinyl chloride film. From the standpoint of the strength and ease of processing, a polyester resin film is more preferable. For the release treatment, it is possible to use, for instance, a release agent such as silicone-based, fluorine-based, long-chain alkyl based, fatty acid amide-based species, and molybdenum sulfide; silica powder, etc. A resin film (e.g. polyester resin film) that has been subjected to release treatment can be preferably used as the release liner. The release treatment layer can be formed at least on one face (e.g. each face) of the resin film.

The thickness of the release liner is not particularly limited. From the standpoint of the conformability to the adhesive face and the efficiency of removal, it is, for instance, possibly about 5 µm to 200 µm, or preferably about 10 µm to 100 µm. In an embodiment of the double-faced PSA sheet of which the respective adhesive faces are protected with two release liners, in view of the efficiency of removing the release liners, the respective release liners preferably differ in thickness. For instance, the first release liner can have a thickness of about 10 µm to 200 µm (typically about 30 µm to 100 µm, e.g. about 50 µm to 80 µm) and the second release liner can have a thickness of about 5 µm or greater and less than 100 µm (typically about 8 µm or greater and less than 50 µm, e.g. about 12 µm to 40 µm). The thickness of the first release liner is preferably about 1.5 times to 5 times (e.g. 2 times to 3 times) the thickness of the second release liner.

### <PSA sheet>

The thickness (total thickness) of the PSA sheet disclosed herein (which includes the PSA layer and the substrate layer, but excludes any release liner) is not particularly limited. It can be in a range of, for instance, about 2 µm to 1000 µm. In some embodiments, in view of the adhesive properties, etc., the thickness of the PSA sheet is preferably about 5 µm to 500 µm (e.g. 10 µm to 300 µm, typically 15 µm to 200 µm). Alternatively, in some embodiments where thinning is considered important, the PSA sheet may have a thickness of 100 µm or less (e.g. 5 µm to 100 µm), 70 µm or less (e.g. 5 µm to 70 µm), or even 45 µm or less (e.g. 5 µm to 45 µm).

In the PSA sheet disclosed herein, biomass-derived carbons preferably account for more than 40 % of the total carbon content therein. In other words, the PSA sheet preferably has a biomass carbon ratio above 40 %. With the use of a PSA sheet with such a high biomass carbon ratio, the usage of fossil-resource-based materials can be reduced. From such a standpoint, it can be said that the higher the biomass carbon ratio of the PSA sheet is, the more preferable it is. The biomass carbon ratio of the PSA sheet is preferably 50 % or higher, possibly 60 % or higher, 70 % or higher, 75 % or higher, or even 80 % or higher. The maximum biomass carbon ratio is 100 % by definition; in some embodiments, the biomass carbon ratio of the PSA sheet is below 100 %. From the standpoint of readily obtaining shear bonding strength, in some embodiments, the biomass carbon ratio of the PSA sheet can be, for instance, 95 % or lower. When adhesive properties are of greater importance, it can be 90 % or lower, or even 85 % or lower.

In some preferable embodiments, the PSA sheet shows a shear bonding strength of 1.8 MPa or greater. The PSA sheet showing such a shear bonding strength exhibits strong resistance to a force that acts to slide bonding surfaces at their interface (i.e. a shear force), thereby showing excellent adherend-holding properties. From the standpoint of obtaining greater holding properties, the shear bonding strength of the PSA sheet is preferably 2.0 MPa or greater, or more preferably 2.2 MPa or greater. In some embodiments, the shear bonding strength can be 2.4 MPa or greater, or even 2.6 MPa or greater. The maximum shear bonding strength is not particularly limited. In general, the higher the more preferable. On the other hand, from the standpoint of facilitating to increase the biomass carbon ratio of the PSA layer, in some embodiments, the shear bonding strength can be, for instance, 20 MPa or less, 15 MPa or less, 10 MPa or less, or even 7 MPa or less. The shear bonding strength is determined by the method described later in Examples.

The PSA sheet according to some embodiments preferably has a peel strength to stainless steel plate of 5 N/20mm or greater. The PSA sheet showing such properties strongly bonds to an adherend; and therefore, typically it can be preferably used in an embodiment where it does not intend re-peeling. From the standpoint of achieving more highly reliable bonding, the peel strength can be, for instance, 10 N/20mm or greater, preferably 11 N/20mm or greater, 12 N/20mm or greater, 13 N/20mm or greater, 14 N/20mm or greater, or even 15 N/20mm or greater. The maximum peel strength is not particularly limited. In general, the higher the more preferable. On the other hand, from the standpoint of facilitating to increase the biomass carbon ratio of the PSA layer, in some embodiments, the peel strength can be, for instance, 50 N/20mm or less, 40 N/20mm or less, or even 30 N/20mm or less. Hereinafter, the peel strength may be referred to as the to-SUS peel strength as well.

The to-SUS peel strength can be determined by the following method: A PSA sheet is cut to a 20 mm wide, 150 mm long size to prepare a measurement sample. In an environment at 23 °C and 50 % RH, the adhesive face of the measurement sample is exposed and press-bonded to a stainless steel plate (SUS304BAplate) as the adherend with a 2 kg rubber roller moved back and forth once. The resultant is left standing in an environment at 50 °C for two hours. Subsequently, in an environment at 23 °C and 50 % RH, using a tensile tester, the peel strength (180° peel strength) (N/20mm) is determined at a peel angle of 180°, at a tensile speed of 300 mm/min, based on JIS Z0237:2000. As the tensile tester, a universal tensile/compression testing machine (machine name "tensile and compression testing machine, TCM-1kNB" available from Minebea Co., Ltd.) can be used. The same method has been used in the working examples described later as well.

It is noted that, for the measurement, a suitable backing material can be applied to the PSA sheet subject to measurement for reinforcement in case of a double-faced PSA sheet, in case of a substrate-supported PSA sheet whose substrate is susceptible to deformation, etc. As the backing material, for instance, PET film of about 25 µm in thickness can be used.

The PSA sheet according to some embodiments has a heat-resistant peel strength to stainless steel plate of preferably 4 N/20mm or greater, more preferably 5 N/20mm or greater, or yet more preferably 7 N/20mm or greater. The PSA sheet showing such properties can achieve more highly reliable bonding. The maximum heat-resistant peel strength is not particularly limited. In general, the higher the more preferable. On the other hand, from the standpoint of facilitating to increase the biomass carbon ratio of the PSA layer, in some embodiments, the heat-resistant peel strength can be, for instance, 30 N/20mm or less, or even 20 N/20mm or less. The heat-resistant peel strength can be determined in the same manner as the to-SUS peel strength described above, except that the adhesive face of the measurement sample is press-bonded to a stainless steel plate (SUS304BA plate) in an environment at 23 °C and 50 % RH and the resultant is then left standing in an environment at 80 °C for 30 minutes.

The PSA sheet according to some embodiments has a peel strength to polypropylene (PP) plate (to-PP peel strength) of preferably 8 N/20mm or greater, more preferably 10 N/20mm or greater, or yet more preferably 13 N/20mm or greater. The PSA sheet showing such properties can strongly bond to a low-polar adherend such as a polyolefinic resin. The maximum to-PP peel strength is not particularly limited. In general, the higher the more preferable. On the other hand, from the standpoint of easily increasing the biomass carbon ratio of the PSA layer, in some embodiments, the to-PP peel strength can be, for instance, 40 N/20mm or less, 30 N/20mm or less, or even 25 N/20mm or less. The to-PP peel strength can be determined in the same manner as for the to-SUS peel strength described above, except that a polypropylene resin plate is used as the adherend.

In some embodiments, the ratio between the to-SUS peel strength and the to-PP peel strength (i.e. the PP/SUS peel strength ratio) can be, for instance, 0.5 or higher, preferably 0.7 or higher, or even 0.9 or higher. The PP/SUS peel strength ratio can be, for instance, 3 or lower, 2 or lower, or even 1.5 or lower. The closer to 1 the PP/SUS peel strength ratio is, the smaller the difference in peel strength is depending on the kind of adherend material is. Such a PSA sheet is preferable because it is highly versatile and is also suited for bonding and fixing different materials.

The PSA sheet according to some embodiments has a peel strength to polyethylene (PE) plate (to-PE peel strength) of suitably 1.5 N/20mm or greater, preferably 3 N/20mm or greater, more preferably 5 N/20mm or greater, or yet more preferably 8 N/20mm or greater. The PSA sheet showing such properties can strongly bond to a low-polar adherend such as a polyolefinic resin. The maximum to-PE peel strength is not particularly limited. In general, the higher the more preferable. On the other hand, from the standpoint of easily increasing the biomass carbon ratio of the PSA layer, in some embodiments, the to-PE peel strength can be, for instance, 30 N/20mm or less, or even 20 N/20mm or less. The to-PE peel strength can be determined in the same manner as for the to-SUS peel strength described above, except that a polyethylene resin plate is used as the adherend.

The PSA sheet disclosed herein is preferably halogen-free (chlorine-free, in particular). A halogen-free PSA sheet can be made by avoiding the use of a halogen-containing material. For instance, with respect to the PSA layer, it is desirable to avoid using an additive that contains a halogenated polymer (e.g. a chlorinated rubber such as polychloroprene rubber). It is desirable to avoid using, as a component of the substrate, a halogenated resin (e.g. vinyl chloride resin) or an additive that contains chlorine.

The PSA sheet disclosed herein is preferably constituted so that it satisfies at least one of the following: (A) the chlorine content is 0.09 % (900 ppm) by weight or less, (B) the bromine content is 0.09 % (900 ppm) by weight or less, and (C) their combined content (chlorine and bromine combined content) is 0.15 % (1500 ppm) by weight or less. More preferably, at least (A) is satisfied. Yet more preferably, (A) and (C) are satisfied. Especially preferably, all (A), (B) and (C) are satisfied. The chlorine content and the bromine content can be determined by known methods such as fluorescent X-ray analysis and ion chromatography.

### <Applications>

Applications of the PSA sheet disclosed herein are not particularly limited and include PSA sheets used for various purposes. The PSA sheet disclosed herein can be preferably used, typically as a double-faced PSA sheet, to fix or attach parts. In such an application, it is particularly significant that the PSA sheet shows good shear bonding strength. In a typical application, it is applied to a part of an electronic device in order to sort of fix, attach or reinforce the part. From the standpoint of thinning the PSA sheet, in some embodiments, it may be preferable to select a substrate-supported double-faced PSA sheet form that uses a thin substrate. As the thin substrate layer, a substrate layer having a thickness of 10 µm or less (e.g. less than 5 µm) can be preferably used.

The PSA sheet disclosed herein is suitable, for example, for fixing parts in mobile electronic devices. Non-limiting examples of the mobile electronic devices include a cellular phone, a smartphone, a tablet type personal computer, a notebook type personal computer, various wearable devices (for example, wrist wearable devices such as a wrist watch, modular devices worn on part of a body with a clip, a strap, or the like, eyewear type devices inclusive of eyeglasses type devices (monocular and binocular type; including head-mounted device), devices attached to clothing, for example, in the form of an accessory on a shirt, a sock, a hat, or the like, earwear type devices which are attached to the ear, such as an earphone), a digital camera, a digital video camera, an acoustic device (a mobile music player, an IC recorder, and the like) , a calculator (electronic calculator and the like), a mobile game machine, an electronic dictionary, an electronic notebook, an e-book reader, an information device for an automobile, a mobile radio, a mobile television, a mobile printer, a mobile scanner, and a mobile modem. The PSA sheet disclosed herein can be preferably used, for example, for the purpose of fixing a pressure-sensitive sensor and other members in those mobile electronic devices, among the abovementioned mobile electronic devices, that include a pressure-sensitive sensor. In one preferred embodiment, the PSA sheet can be used for fixing a pressure-sensitive sensor and other members in an electronic device (typically, a mobile electronic device) having a function of enabling the designation of an absolute position on a plate corresponding to the screen (typically, a touch panel) in an apparatus for indicating the position on a screen (typically, a pen type or a mouse type apparatus) and an apparatus for detecting the position. The term "mobile" in this description means not just providing simple mobility, but further providing a level of portability that allows an individual (average adult) to carry it relatively easily.

The matters disclosed herein include the following:
(1) A PSA sheet comprising:
   a substrate layer that comprises a polyester resin; and
   a PSA layer placed on at least one face of the substrate layer, wherein
   at least 50 % of all carbons in the PSA layer are biomass-derived carbons, and
   the polyester resin includes biomass-derived carbons.
(2) The PSA sheet according to (1) above, wherein the substrate layer has the thickness accounting for at least 10 % of the total thickness of the PSA sheet.
(3) The PSA sheet according to (1) or (2) above, wherein the substrate layer has a breaking strength of 200 MPa or greater.
(4) The PSA sheet according to any of (1) to (3) above, wherein at least 50 % of all carbons in the PSA sheet are biomass-derived carbons.
(5) The PSA sheet according to any of (1) to (4) above, wherein the substrate layer has the thickness accounting for up to 50% of the total thickness of the PSA sheet.
(6) The PSA sheet according to any of (1) to (5) above, wherein at least 5 % of all carbons in the substrate layer are biomass-derived carbons.
(7) The PSA sheet according to any of (1) to (6) above, having a shear bonding strength of 1.8 MPa or greater.
(8) The PSA sheet according to any of (1) to (7) above, that is an adhesively double-faced PSA sheet provided with the PSA layer on each face of the substrate layer.
(9) The PSA sheet according to any of (1) to (8) above, used for fixing a part of an electronic device.
(10) The PSA sheet according to any of (1) to (9) above, wherein the PSA layer is formed from a natural rubber-based PSA.
(11) The PSA sheet according to any of (1) to (10) above, wherein the PSA comprises a base polymer in which 20 % by weight or more (typically 20 % by weight or more and 70 % by weight or less) of all repeat units forming the base polymer is derived from an acrylic monomer.
(12) The PSA sheet according to any of (1) to (11) above, wherein the PSAlayer includes a tackifier derived from a plant (a plant-derived tackifier).
(13) The PSA sheet according to (12) above, wherein the plant-derived tackifier is included in an amount of 30 parts by weight or greater (typically 30 parts by weight or greater and 100 parts by weight or less) to 100 parts by weight of the base polymer in the PSA layer.
(14) The PSA sheet according to (12) or (13) above, wherein the plant-derived tackifier comprises at least one species selected from the group consisting of terpene-based resins and modified terpene-based resins.
(15) The PSA sheet according to any of (1) to (14) above, wherein the PSA layer comprises a crosslinking agent and the crosslinking agent is selected among sulfur-free crosslinking agents.
(16) The PSA sheet according to (15) above, wherein the crosslinking agent comprises an isocyanate-based crosslinking agent.
(17) The PSA sheet according to any of (1) to (16) above, wherein the PSA layer includes a filler in an amount of less than 10 parts by weight (typically, 0 part by weight or greater and less than 10 parts by weight) to 100 parts by weight of the base polymer.
(18) The PSA sheet according to any of (1) to (17) above, having a peel strength to stainless steel plate of 5 N/20mm or greater (e.g. 5 N/20mm or greater and 50 N/20mm or less).
(19) The PSA sheet according to any of (1) to (18) above, wherein the PSA layer comprises an acrylate-modified natural rubber as the base polymer.
(20) The PSA sheet according to (19) above, wherein the acrylate-modified natural rubber is a natural rubber grafted with methyl methacrylate.
(21) The PSA sheet according to (19) or (20) above, wherein the acrylic monomer-derived repeat unit has a ratio of 1 % or more and less than 80 % to the entire acrylate-modified natural rubber by weight.
(22) The PSA sheet according to (1) to (21) above that is free of halogens.

### [Examples]

Several working examples related to the present invention are described below, but these working examples are not to limit the present invention. In the description below, "parts" and "%" are by weight unless otherwise specified.

### <Test Methods>

### [Shear bonding strength]

A PSA sheet (typically a double-faced PSA sheet) is cut to a 10 mm by 10 mm size to prepare a measurement sample. In an environment at 23 °C and 50 % RH, the respective adhesive faces of the measurement sample are overlaid and press-bonded onto the surfaces of two stainless steel plates (SUS304BA plates) with a 2 kg roller moved back and forth once. The resultant is left standing for two days in the same environment. Subsequently, using a tensile tester, the shear bonding strength (MPa) is determined at a tensile speed of 10 mm/min at a peel angle of 0°. Specifically, as shown in Fig. 5, the first and second adhesive faces 50A and 50B of measurement sample 50 are applied and press-bonded to stainless steel plates 61 and 62, respectively. This is pulled at the aforementioned speed in the arrowed direction (i.e. shear direction) in Fig. 5 and the peel strength per 10 mm by 10 mm area is measured. From the resulting value, the shear bonding strength (MPa) is determined. As for an adhesively single-faced PSA sheet (single-faced PSA sheet), the non-adhesive face of the sheet is fixed to a stainless steel plate with an adhesive and the like and the resultant can be subjected to measurement in the same manner as above. As the tensile tester, a universal tensile/compression tester (product name TG-1kN available from Minebea Co., Ltd.) can be used.

### [Processability]

A release-lined PSA sheet is cut to a 5 cm × 10 cm size to prepare a measurement sample. The measurement sample is placed with the release liner side up. Using a cutter, two parallel slits of about 8 cm in length are cut 1 cm apart in the center of the measurement sample. The slits are cut deep enough to pierce the measurement sample. The measurement sample is continuous at the slits' ends each having a non-slitted segment of about 1 cm. Subsequently, over the top of the measurement sample, a 2 kg roller is rolled back and forth in the slit's length direction five times, covering the slits. The measurement sample is then cut near the slits' ends with scissors (cut in a direction vertical to the slit's length direction) to eliminate the non-slitted segments. The measurement sample is slowly pulled in directions that split it at the slits and is visually inspected for the presence of adhesive bleed. A sample with no adhesive bleed is graded "Good" and a sample found with adhesive bleed is graded "Poor."

### <Example 1>

### (Preparation of PSA composition)

To a toluene solution containing 49 parts of natural rubber (RSS1 grade, masticated), were added 36 parts of methyl methacrylate (MMA) and 0.4 part of a peroxide-based initiator and solution polymerization was carried out to obtain a toluene solution of acrylate-modified natural rubber A in which the natural rubber was grafted with MMA. As the peroxide-based initiator, were used BPO (product name NYPER BW available from NOF Corporation) and dilauroyl peroxide (product name PEROYL L available from NOF Corporation) at a weight ratio of about 1:1.7.

To the toluene solution of acrylate-modified natural rubber A, with respect to 100 parts of acrylate-modified natural rubber A in the solution, were added 70 parts of a terpene-based tackifier resin (product name YS RESIN PX1150N available from Yasuhara Chemical Co., Ltd. softening point: 115 ± 5 °C; or tackifier resin TF-2, hereinafter), 3 parts of an anti-aging agent (phenolic anti-aging agent, product name IRGANOX 1010 available from BASF Corporation) and 4 parts of an isocyanate-based crosslinking agent (product name CORONATE L available from Tosoh Corporation). The resulting mixture was allowed to stir evenly to prepare a PSA composition A according to this Example.

### (Preparation of PSA sheet)

To the release face of a first 38 µm thick release liner (product name DIAFOIL MRF38 available from Mitsubishi Polyester Film, Inc.) with the release face formed with a silicone-based release agent on one face of polyester film, was applied the PSA composition A and allowed to dry at 100 °C for 2 minutes to form a first PSA layer which is 4 µm thick. To the release face of a second 38 µm thick release liner (product name DIAFOIL MHA25 available from Mitsubishi Polyester Film, Inc.) with the release face formed with a silicone-based release agent on one face of polyester film, was applied the PSA composition A and allowed to dry at 100 °C for 2 minutes to form a second PSA layer which is 4 µm thick. Was obtained a 2 µm thick PET resin film substrate molded using a biomass PET resin. To the respective faces of the PET resin film substrate, were adhered the PSA layers formed on the first and second release liners to prepare a PSA sheet (transfer method). The release liners were left as they were on the PSA layers and used to protect the surfaces (adhesive faces) of the PSA layers. In this manner, was obtained a double-faced PSA sheet of 10 µm in total thickness, having the first PSA layer (4 µm thick) and the second PSA layer (4 µm thick) on the first and second faces of the substrate layer (2 µm thick), respectively. The biomass PET resin had been synthesized using terephthalic acid or a derivative thereof and a plant-derived ethylene glycol as a biomass-derived material.

### <Example 2>

As the substrate layer, was used a 6 µm thick PET resin film molded using a biomass PET resin. The first and second PSA layers were formed 12 µm thick each. Otherwise in the same manner as Example 1, was obtained a double-faced PSA sheet of 30 µm in total thickness.

### <Example 3>

As the substrate layer, was used a 12 µm thick PET resin film molded using a biomass PET resin. The first and second PSA layers were formed 19 µm thick each. Otherwise in the same manner as Example 1, was obtained a double-faced PSA sheet of 50 µm in total thickness.

### <Example 4>

As the substrate layer, was used a 25 µm thick PET resin film molded using a biomass PET resin. The first and second PSA layers were formed 38 µm thick each. Otherwise in the same manner as Example 1, was obtained a double-faced PSA sheet of 100 µm in total thickness.

### <Example 5>

As the substrate layer, was used a 12 µm thick PET resin film (product name LUMIRROR S10 available from Toray Industries, Inc.). Otherwise in the same manner as Example 3, was obtained a double-faced PSA sheet of 50 µm in total thickness.

### <Example 6>

As the substrate layer, was used a 25 µm thick PET resin film (product name LUMIRROR S10 available from Toray Industries, Inc.). Otherwise in the same manner as Example 4, was obtained a double-faced PSA sheet of 100 µm in total thickness.

### <Example 7>

To the release face of a 38 µm thick release liner (product name DIAFOIL MRF38 available from Mitsubishi Polyester Film, Inc.) with the release face formed with a silicone-based release agent on one face of polyester film, was applied the PSA composition A and allowed to dry at 100 °C for 2 minutes to form a 10 µm thick PSA layer. To the PSA layer, was adhered the release face of a 25 µm thick release liner (product name DIAFOIL MRF25 available from Mitsubishi Polyester Film, Inc.) with the release face formed with a silicone-based release agent on one face of polyester film. By this, was obtained a substrate-free double-faced PSA sheet protected on both sides with the two polyester release liners.

### <Examples 8 to 10>

The amount of PSA composition A applied was adjusted to form 30 µm (Ex. 8), 50 µm (Ex. 9) and 100 µm (Ex. 10) thick PSA layers, respectively. Otherwise in the same manner as Example 7, were obtained substrate-free double-faced PSA sheets according to the respective Examples.

### <Measurements and Evaluation>

With respect to the PSA sheet obtained in each Example, the shear bonding strength was determined by the aforementioned method to evaluate the processability. In addition, with respect to the PSA sheet according to each Example, the biobased contents of the PSA layer and substrate layer were determined based on ASTM D6866. The biobased content of the PSA sheet was further determined from the sum of the product of the PSA layer biobased content multiplied by its thickness ratio and the product of the substrate layer biobased content multiplied by its thickness ratio. The results are shown in Table 1.

[Table 1]

**Table 1**

| | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|
| PSA sheet | Thickness (µm) | 10 | 30 | 50 | 100 | 50 | 100 | 10 | 30 | 50 | 100 |
| | Biobased content (%) | 71 | 76 | 68 | 68 | 65 | 65 | 85 | 85 | 85 | 85 |
| PSA | Thickness per face (µm) | 4 | 12 | 19 | 38 | 19 | 38 | 10 | 30 | 50 | 100 |
| | Biobased content (%) | 85 | 85 | 85 | 85 | 85 | 85 | 85 | 85 | 85 | 85 |
| Substrate | Material | PET | PET | PET | PET | PET | PET | - | - | - | - |
| | Thickness (µm) | 2 | 6 | 12 | 25 | 12 | 25 | - | - | - | |
| | Biobased content (%) | 15 | 15 | 15 | 15 | 0 | 0 | - | - | - | - |
| Shear bonding strength (MPa) | | 2.8 | 3.1 | 2.7 | 2.0 | 2.7 | 2.0 | 2.4 | 2.5 | 2.1 | 1.7 |
| Processability | | Good | Good | Good | Good | Good | Good | Poor | Poor | Poor | Poor |

As shown in Table 1, for each of Examples 1 to 4 using PSA sheets that comprises PSA layers having biomass carbon ratios of 50 % or higher and polyester resin-containing substrate layers comprising biomass-derived carbons, with the use of biomass materials in both the PSA layer and the substrate layer, in comparison with Examples 5 and 6 using non-biomass substrate layers, for instance, as evident from the comparison between Examples 3 and 5 using substrate layers of the same thickness, the biobased content was increased as the PSA sheet at large while maintaining comparable shear bonding strength. Due to the use of biomass polyester resin-containing substrate layers, Examples 1 to 4 also showed excellent processability. On the other hand, with respect to Examples 7 to 10 using substrate-free PSA sheets, good processability was not obtained.

These results show that according to a PSA sheet having a biomass polyester resin-containing substrate layer and a PSA layer having a biomass carbon ratio of 50 % or higher, the dependence on fossil-resource-based materials can be reduced as the PSA sheet at large while obtaining good processability.

Although specific embodiments of the present invention have been described in detail above, these are merely for illustrations and do not limit the scope of claims. The art according to the claims includes various modifications and changes made to the specific embodiments illustrated above.

### [Reference Signs List]

- 1, 2, 3, 4: PSA sheets
- 10: substrate layer
- 21, 22: PSA layers
- 31, 32: release liners
- 50: measurement sample
- 50A, 50B: adhesive faces
- 61, 62: stainless steel plates

## Claims

1. A pressure-sensitive adhesive sheet comprising:
a substrate layer that comprises a polyester resin; and
a pressure-sensitive adhesive layer placed on at least one face of the substrate layer, wherein
at least 50 % of all carbons in the pressure-sensitive adhesive layer are biomass-derived carbons, and
the polyester resin includes biomass-derived carbons.

2. The pressure-sensitive adhesive sheet according to Claim 1, wherein the substrate layer has the thickness accounting for at least 10 % of the total thickness of the pressure-sensitive adhesive sheet.

3. The pressure-sensitive adhesive sheet according to Claim 1 or 2, wherein the substrate layer has a breaking strength of 200 MPa or greater.

4. The pressure-sensitive adhesive sheet according to any one of Claims 1 to 3, wherein at least 50 % of all carbons in the pressure-sensitive adhesive sheet are biomass-derived carbons.

5. The pressure-sensitive adhesive sheet according to any one of Claims 1 to 4, wherein the substrate layer has the thickness accounting for up to 50 % of the total thickness of the pressure-sensitive adhesive sheet.

6. The pressure-sensitive adhesive sheet according to any one of Claims 1 to 5, wherein at least 5 % of all carbons in the substrate layer are biomass-derived carbons.

7. The pressure-sensitive adhesive sheet according to any one of Claims 1 to 6, having a shear bonding strength of 1.8 MPa or greater.

8. The pressure-sensitive adhesive sheet according to any one of Claims 1 to 7, wherein the pressure-sensitive adhesive sheet is an adhesively double-faced pressure-sensitive adhesive sheet provided with the pressure-sensitive adhesive layer on each face of the substrate layer.

9. The pressure-sensitive adhesive sheet according to any one of Claims 1 to 8, used for fixing a part of an electronic device.

10. The pressure-sensitive adhesive sheet according to any one of Claims 1 to 9, wherein the pressure-sensitive adhesive layer is formed from a natural rubber-based pressure-sensitive adhesive.

11. The pressure-sensitive adhesive sheet according to any one of Claims 1 to 10, wherein the pressure-sensitive adhesive comprises a base polymer in which 20 % by weight or more of all repeat units forming the base polymer is derived from an acrylic monomer.

12. The pressure-sensitive adhesive sheet according to any one of Claims 1 to 11, wherein the pressure-sensitive adhesive layer includes a tackifier derived from a plant.

13. The pressure-sensitive adhesive sheet according to Claim 12, wherein the plant-derived tackifier is included in an amount of 30 parts by weight or greater to 100 parts by weight of the base polymer in the pressure-sensitive adhesive layer.

14. The pressure-sensitive adhesive sheet according to Claim 12 or 13, wherein the plant-derived tackifier comprises at least one species selected from the group consisting of terpene-based resins and modified terpene-based resins.

15. The pressure-sensitive adhesive sheet according to any one of Claims 1 to 14, wherein the pressure-sensitive adhesive layer comprises a crosslinking agent and the crosslinking agent is selected among sulfur-free crosslinking agents.

16. The pressure-sensitive adhesive sheet according to Claim 15, wherein the crosslinking agent comprises an isocyanate-based crosslinking agent.

17. The pressure-sensitive adhesive sheet according to any one of Claims 1 to 16, wherein the pressure-sensitive adhesive layer includes a filler in an amount of less than 10 parts by weight to 100 parts by weight of the base polymer.

18. The pressure-sensitive adhesive sheet according to any one of Claims 1 to 17, having a peel strength to stainless steel plate of 5 N/20mm or greater.

19. The pressure-sensitive adhesive sheet according to any one of Claims 1 to 18, wherein the pressure-sensitive adhesive layer comprises an acrylate-modified natural rubber as the base polymer.

20. The pressure-sensitive adhesive sheet according to Claim 19, wherein the acrylate-modified natural rubber is a natural rubber grafted with methyl methacrylate.

21. The pressure-sensitive adhesive sheet according to Claim 19 or 20, wherein the acrylic monomer-derived repeat unit has a ratio of 1 % or more and less than 80 % to the entire acrylate-modified natural rubber by weight.

22. The pressure-sensitive adhesive sheet according to any one of Claims 1 to 21, wherein the pressure-sensitive adhesive sheet is free of halogens.
